# EUROPÄISCHE PATENTANMELDUNG

(11) **EP 2 679 932 A2**
(43) Veröffentlichungstag der Anmeldung: **01.01.2014**
(21) Anmeldenummer: 13171698.7
(22) Anmeldetag: 12.06.2013
(51) Int. Cl.: F25B 21/02

(54) **Thermoelektrische Temperiereinheit**

(30) Priorität: 29.06.2012 DE 102012211259
(71) Anmelder: Behr GmbH & Co. KG, 70469 Stuttgart (DE)
(72) Erfinder: Grünwald, Jürgen, 71638 Ludwigsburg (DE); Neumeister, Dirk, 70374 Stuttgart (DE); Wehowski, Manuel, 70563 Stuttgart (DE); Neff, Heiko, 71549 Auenwald (DE); Steinbach, Martin, 71336 Waiblingen (DE); Moldovan, Florin, 70569 Stuttgart (DE)
(74) Vertreter: Grauel, Andreas

(57) **Zusammenfassung**

Thermoelektrische Temperiereinheit (1), insbesondere zur Temperierung eines Energiespeichers in einem Kraftfahrzeug, mit zumindest einem ersten Peltierelement (2), welches eine erste Oberfläche (37) und eine zweite, der ersten Oberfläche (37) im Wesentlichen benachbart oder gegenüberliegende Oberfläche (38) aufweist, wobei die Oberfläche (37) thermisch leitend mit zumindest einem ersten Strömungskanal (11) und/oder einem zweiten Strömungskanal (12) verbunden ist, welche von einem ersten Fluid durchströmbar sind, und die zweite Oberfläche thermisch leitend mit zumindest einem ersten wärmeerzeugenden Element verbunden ist, wobei der erste Strömungskanal (11) an einem seiner Enden mit einem ersten Sammler (14, 22) in Fluidkommunikation steht und der zweite Strömungskanal (12) an einem seiner Enden mit einem zweiten Sammler (15, 23) in Fluidkommunikation steht und der erste Strömungskanal (11) und der zweite Strömungskanal (12) an ihrem jeweils zweiten Ende mit einem gemeinsamen Umlenksammler (13) in Fluidkommunikation stehen.

## Beschreibung

### Technisches Gebiet

Vorteilhaft ist eine thermoelektrische Temperiereinheit, insbesondere zur Temperierung eines Energiespeichers in einem Kraftfahrzeug, mit zumindest einem ersten Peltierelement, welches eine erste Oberfläche und eine zweite, der ersten Oberfläche im Wesentlichen benachbart oder gegenüberliegende Oberfläche aufweist, wobei die erste Oberfläche thermisch leitend mit zumindest einem ersten Strömungskanal und/oder einem zweiten Strömungskanal verbunden ist.

### Stand der Technik

Kraftfahrzeuge mit elektrischen Zusatzantrieben oder vollelektrischen Antrieben benötigen in der Regel elektrische Energiespeicher. Um diese elektrische Energiespeicher stets in einem optimalen Temperaturfenster hinsichtlich ihrer Leistungsfähigkeit zu halten, müssen diese Energiespeicher je nach Umgebungsbedingung zeitweise gekühlt oder beheizt werden.

Dabei werden hohe Anforderungen an die Homogenität der Temperaturverteilung innerhalb der Energiespeicher gestellt, um zum einen eine gleichmäßige Leistungsaufnahme und -abgabe zu gewährleisten und außerdem ungleiche Alterungsprozesse in Folge von unterschiedlicher Temperaturbeaufschlagung zu vermeiden.

Die hierfür benötigte Kühl- und Heizleistung weicht in der Regel von der für die Temperierung einer Fahrgastkabine benötigten Kühl- und Heizleistungen deutlich nach unten ab.

In heute bekannten Anwendungen werden die Energiespeicher entweder durch klimatisierte Kabinenluft, mit einem Kühlmittel welches über einen sogenannten Chiller oder einen Kühlmittelkreislauf der Klimaanlage temperiert wird oder direkt über ein Kältemittel gekühlt.

Der Heizbetrieb wird heutzutage in der Regel über einen elektrischen inneren Kurzschluss dargestellt oder mittels externer Widerstandsheizelemente.

Da die benötigte Kühlleistung, wie oben bereits erwähnt, in der Regel deutlich geringer ausfällt, als in herkömmlichen, zur Temperierung des Innenraums eingesetzten Systemen, ist ein Downsizing der verwendeten Komponenten wünschenswert.

In der Literatur gibt es ebenfalls auch erste Untersuchungen zur Temperierung von Energiespeichern Peltierelemente einzusetzen. Hierzu sind allerdings heute keine serienfähigen Lösungen bekannt, die eine ausreichende Kühl- und Heizleistung bei angemessenem Bauraumbedarf bereitstellen.

Insbesondere nachteilig am Stand der Technik ist, dass Peltierelemente in der Regel eine hohe Stromaufnahme im Verhältnis zur erbrachten Kühlleistung mit sich bringen, insbesondere dann, wenn die Temperaturunterschiede zwischen der warmen und der kalten Seite der Peltierelemente größer werden.

Dies ist insbesondere im Umfeld von reichweitensensiblen E-Fahrzeuganwendungen zu vermeiden.

### Darstellung der Erfindung, Aufgabe, Lösung, Vorteile

Daher ist es die Aufgabe der vorliegenden Erfindung, eine thermoelektrische Temperiereinheit bereitzustellen, welche eine über die Fläche gleichmäßige Temperaturverteilung und gleichmäßige Wärmeabgabe ermöglicht.

Die Aufgabe der vorliegenden Erfindung wird durch eine thermische Temperiereinheit mit den Merkmalen gemäß Anspruch 1 gelöst. Vorteilhafte Weiterbildungen der vorliegenden Erfindung sind in den Unteransprüchen beschrieben.

Ein Ausführungsbeispiel der Erfindung betrifft eine thermoelektrische Temperiereinheit, insbesondere zur Temperierung eines Energiespeichers in einem Kraftfahrzeug, mit zumindest einem ersten Peltierelement, welches eine erste Oberfläche und eine zweite, der ersten Oberfläche im Wesentlichen benachbart oder gegenüberliegende Oberfläche aufweist, wobei die erste Oberfläche thermisch leitend mit zumindest einem ersten Strömungskanal und/oder einem zweiten Strömungskanal verbunden ist, welche von einem ersten Fluid durchströmbar sind, und die zweite Oberfläche thermisch leitend mit zumindest einem ersten wärmeerzeugenden Element verbunden ist, wobei der erste Strömungskanal an einem seiner Enden mit einem ersten Sammler in Fluidkommunikation steht und der zweite Strömungskanal an einem seiner Enden mit einem zweiten Sammler in Fluidkommunikation steht und der erste Strömungskanal und der zweite Strömungskanal an ihrem jeweils zweiten Ende mit einem gemeinsamen Umlenksammler in Fluidkommunikation stehen.

Auf diese Weise kann das Peltierelement Wärme von einer seiner Oberflächen an die andere transportieren, sofern eine ausreichende Spannung an das Peltierelement angelegt ist. Es kann somit ein ausreichender Wärmetransport erreicht werden, ohne mechanisch bewegliche Teile einsetzen zu müssen. Vorteilhaft ist, dass das Peltierelement sowohl mit dem wärmeerzeugenden Element, von welchem es im Regelfall die Wärme abführen soll, als auch mit den Strömungskanälen, an welche das Peltierelement die Wärme weiterleiten soll in einer thermisch möglichst gut leitenden Verbindung steht.

Das wärmeerzeugende Element ist in einer vorteilhaften Ausführungsform eines der Batterieelemente, welche in ihrer Gesamtheit den Energiespeicher bilden.

Weiterhin vorteilhaft ist es, wenn der erste Strömungskanal und der zweite Strömungskanal im Wesentlichen parallel zueinander verlaufen.

Auch zweckmäßig ist es, wenn das erste Fluid im ersten Strömungskanal im Gegenstrom zu dem ersten Fluid im zweiten Strömungskanal strömbar ist.

Der Gegenstrom ermöglicht einen besonders vorteilhaften Verlauf des Temperaturniveaus über die Strömungskanäle hinweg. Durch das Strömen des Fluids in die eine Richtung und das Rückströmen in die andere Richtung ergeben sich unterschiedliche Temperaturniveaus in den ersten und den zweiten Strömungskanälen, bedingt durch die Dauer des Kontaktes mit dem wärmeerzeugenden Element.

Eine Mittelung des Temperaturniveaus über die ersten und zweiten Strömungskanäle hinweg ergibt ein Temperaturniveau mit deutlich geringerer Streuung als bei einer Anordnung von Strömungskanälen, die alle in der gleichen Richtung durchströmt werden.

Weiterhin zu bevorzugen ist es, wenn die erste Oberfläche der Peltierelemente über eine erste Platte mit dem ersten Strömungskanal und/oder dem zweiten Strömungskanal in thermischen Kontakt steht.

Durch die Verwendung einer Platte zwischen den einzelnen Peltierelementen und den Strömungskanälen, kann eine bessere thermische Anbindung der Peltierelemente an die Strömungskanäle erreicht werden. Die ist insbesondere vorteilhaft, wenn die Peltierelemente breiter sind, als die einzelnen Strömungskanäle. Die Peltierelemente würden ansonsten über die Strömungskanäle überstehen und es könnte sich in dem Spalt zwischen den Strömungskanälen ein Hitzestau bilden, der sich nachteilig auf den Wirkungsgrad der thermoelektrischen Temperiereinheit auswirkt.

Durch die parallele Ausrichtung der Strömungskanäle, insbesondere in einer gemeinsamen Ebene ist es besonders einfach möglich, die Strömungskanäle mit einer Platte zu verbinden, um eine ebene, von der Struktur der Strömungskanäle unabhängige Anbindungsfläche für die Peltierelemente realisieren zu können.

Die verwendete Platte kann in einer vorteilhaften Ausführungsform aus Kunststoff oder Metall oder Keramik bestehen. Die verwendete Platte sollte in einer weiteren vorteilhaften Ausführungsform gute thermisch leitende Eigenschaften aufweisen.

Außerdem ist es zweckmäßig, wenn die erste Platte Schlitze aufweist, die zwischen dem ersten Strömungskanal und dem zweiten Strömungskanal angeordnet sind

Durch diese Schlitze können thermische Brücken zwischen den ersten und den zweiten Strömungskanälen vermieden werden. Es ist jedoch darauf zu achten, dass durch die Schlitze in der Platte nicht die mechanische Stabilität der gesamten Temperiereinheit negativ beeinflusst wird. Der durch eventuell vorhandene thermische Brücken entstehenden Nachteil ist der eventuell negativ beeinflussten mechanischen Stabilität in jedem Fall nachzuordnen.

Auch zweckmäßig ist es, wenn der gemeinsame Umkehrsammler fluidleitende Strukturen aufweist, welche das erste Fluid von dem ersten Strömungskanal in den zweiten Strömungskanal leitet.

Durch solche fluidleitende Strukturen kann die Aufteilung in die ersten und zweiten Strömungskanäle verbessert werden.

Außerdem vorteilhaft ist es, wenn die zweite Oberfläche des Peltierelementes mit einer dritten Fläche einer zweiten Platte verbunden ist und die vierte Fläche der zweiten Platte mit dem zumindest ersten wärmeerzeugenden Element verbunden ist.

Durch die Anbindung der Peltierelemente an eine Platte, können die wärmeerzeugenden Elemente, welche in einer erfindungsgemäßen Ausführung Batterieelemente sind, besonders vorteilhaft an die Peltierelemente angebunden werden. Es ist darauf zu achten, eine Platte einzusetzen, die nur einen möglichst geringen thermischen Widerstand aufweist.

Darüber hinaus ist es zweckmäßig, wenn der erste Sammler von dem zweiten Sammler thermisch isoliert ist.

Hierdurch wird vermieden, dass eine zusätzliche thermische Brücke zwischen den ersten Strömungskanälen und den zweiten Strömungskanälen entsteht.

Auch vorteilhaft ist es, wenn der erste Sammler und der zweite Sammler in einem Bauteil realisiert sind.

Die Realisierung in einem Bauteil lässt eine besonders platzsparende Ausführung der thermoelektrischen Temperiereinheit zu.

Außerdem wünschenswert ist es, wenn die thermoelektrische Temperiereinheit eine Mehrzahl von ersten Strömungskanälen aufweist und eine Mehrzahl von zweiten Strömungskanälen aufweist, wobei bevorzugt die Anzahl der zweiten Strömungskanäle gleich groß oder größer der Anzahl der ersten Strömungskanäle ist.

Dies ergibt einen Vorteil für die Wärmeaufnahme der beiden Strömungskanäle. Durch die tendenziell höhere Temperatur der zweiten Strömungskanäle entsteht eine geringere treibende Temperaturdifferenz zu den Peltierelementen als bei den ersten Strömungskanälen. Durch eine Mehrzahl an zweiten Strömungskanälen im Vergleich zur Anzahl der ersten Strömungskanäle kann dies vorteilhaft ausgeglichen werden.

Auch ist es zweckmäßig, wenn einzelne Strömungskanäle oder Gruppen von Strömungskanälen der ersten Strömungskanäle und der zweiten Strömungskanäle abwechselnd zueinander angeordnet sind.

Durch diese abwechselnde Anordnung der Strömungskanäle ergibt sich insbesondere hinsichtlich der Temperaturverteilung über die ersten und zweiten Strömungskanäle hinweg ein vorteilhaftes Verteilungsbild.

Außerdem ist es vorteilhaft, wenn die thermoelektrische Temperiereinheit eine Mehrzahl von Peltierelementen aufweist und eine Mehrzahl von wärmeerzeugenden Elementen aufweist.

Eine Mehrzahl von Peltierelementen ermöglicht einen größeren Wärmetransport, wodurch das Gesamtsystem erhebliche Vorteile für den kommerziellen Einsatz aufweist.

### Kurze Beschreibung der Zeichnungen

Im Folgenden wird die Erfindung anhand eines Ausführungsbeispiels unter Bezugnahme auf die Zeichnung detailliert erläutert. In der Zeichnung zeigen:
- Fig.1: eine schematische Ansicht der thermoelektrischen Temperiereinheit mit einem Kühlmittelkreislauf, der zur Wärmeabfuhr dient,
- Fig. 2: eine schematische Darstellung des Durchflussprinzips der thermoelektrischen Temperiereinheit,
- Fig. 3: eine schematische Darstellung einer Anordnung des Einlasssammelkastens und des Auslasssammelkastens in unterschiedlichen Ebenen,
- Fig. 4: eine schematische, perspektivische Ansicht einer thermoelektrischen Temperiereinheit, wobei der Einlasssammelkasten und der Auslasssammelkasten in einem Bauteil realisiert sind.
- Fig. 5: zeigt eine perspektivische Explosionsdarstellung eines Bauteils, in welchem der Einlasssammelkasten und der Auslasssammelkasten integriert sind,
- Fig. 6: zeigt eine Explosionsdarstellung der Anbindung der Peltierelemente zur Batterieseite hin, und
- Fig. 7: zeigt eine schematische Darstellung der thermoelektrischen Temperiereinheit mit angedeuteten Batterieelementen.

### Bevorzugte Ausführung der Erfindung

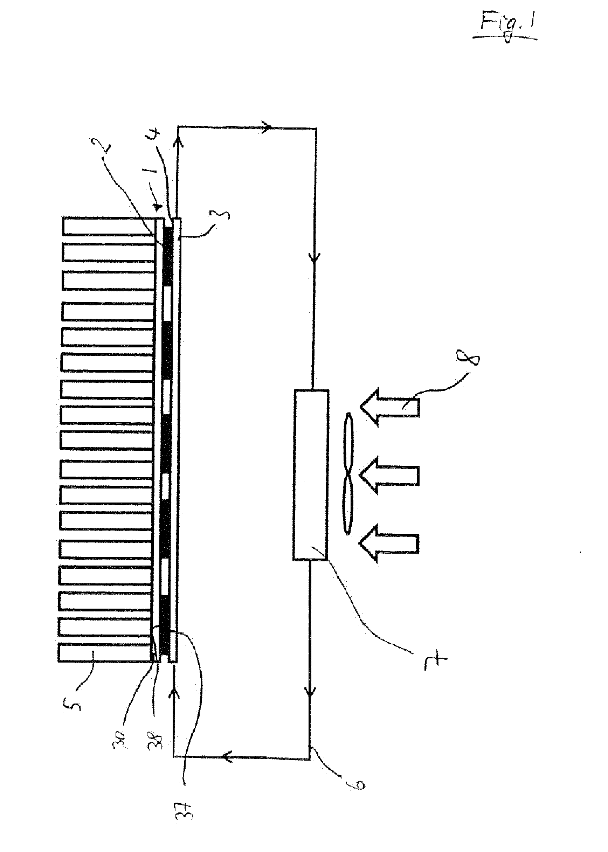

Die Figur 1 zeigt eine schematische Ansicht einer thermoelektrischen Temperiereinheit 1. In der Figur 1 ist die thermoelektrische Temperiereinheit 1 in einem Schnitt dargestellt und da lediglich das Prinzip der thermoelektrischen Temperiereinheit 1 dargestellt werden soll, ist sie nicht vollständig dargestellt.

Oberhalb der thermoelektrischen Temperiereinheit 1 ist eine Mehrzahl von Batterieelementen 5 angeordnet, zu deren Temperierung die thermoelektrische Temperiereinheit 1 dient. Die thermoelektrische Temperiereinheit 1 besteht im Wesentlichen aus einer Mehrzahl von Peltierelementen 2, welche in der Lage sind Wärme von einer ihrer Außenflächen zur gegenüberliegenden Außenfläche durch das Anlegen einer Spannung zu transportieren. Dadurch können die Batterieelemente 5 entweder abgekühlt werden oder erwärmt werden.

Der Fokus der Erfindung liegt auf dem Abkühlen der Batterieelemente 5. Um die von den Batterieelementen 5 aufgenommene Wärme aus der thermoelektrischen Temperiereinheit 1 abführen zu können, müssen die Peltierelemente 2 mit einem Kühlmittelstrom, wie er in der Figur 1 durch das Bezugszeichen 6 gekennzeichnet ist, in thermisch leitendem Kontakt stehen.

Hierzu steht eine erste Oberfläche 37 der Peltierelemente 2 mit einem Wärmeübertrager 3 in thermisch leitender Verbindung. Der Wärmeübertrager 3 bildet dabei eine Schnittstelle zu dem Kühlkreislauf 6 und kann beispielsweise durch kühlmitteldurchströmte Rohre gebildet sein. Die Verbindung der ersten Oberflächen 37 mit dem Wärmeübertrager 3 erfolgt in dem, in Figur 1 gezeigten Ausführungsbeispiel über eine Platte 4, welche als Zwischenelement zwischen den Strömungskanälen 11, 12 des Wärmeübertragers 3 und den Peltierelementen 2 angeordnet ist.

Alternativ kann die thermisch leitende Verbindung auch direkt mit dem Wärmeübertrager 3 hergestellt werden, indem die Peltierelemente 2 ohne ein Zwischenelement auf die Strömungskanäle 11, 12 des Wärmeübertragers aufgebracht werden. Die der ersten Oberfläche 37 gegenüberliegende zweite Oberfläche 38 der Peltierelemente 2 steht mit einem oder mehreren wärmeerzeugenden Elementen in thermischen Kontakt. Das wärmeerzeugende Element ist in Figur 1 durch eine Mehrzahl von Batterieelementen 5 gebildet. Die von den Batterieelementen 5 ausgestrahlte Wärme wird durch die Peltierelemente 2 an die Kontaktstelle der Peltierelemente 2 mit dem Kühlkreislauf 6 gefördert und dort an das im Kühlkreislauf 6 strömende Kühlmittel abgegeben.

Die Wärmemenge, welche an das Kühlmittel im Kühlkreislauf 6 abgegeben wird, wird nachfolgend von einem Wärmeübertrager 7, welcher mit einem Strom von Außenluft 8 durchströmt wird, gekühlt und wird an die Umgebung abgegeben. Der Aufbau des Kühlmittelkreislaufs 6 sowie die darin enthaltenen Komponenten außerhalb der thermoelektrischen Temperiereinheit 1 sind nicht Gegenstand der Erfindung und werden daher nicht weiter im Detail beschrieben.

Die Peltierelemente 2 sind entweder direkt an die Batterieelemente 5 angebunden oder aber, wie in Figur 1 gezeigt, über ein Zwischenmedium, wie etwa eine Platte 30.

Es ist dabei zu beachten, dass stets eine gute thermisch leitende Verbindung zwischen den Peltierelementen 2 und der Wärmequelle beziehungsweise der Wärmesenke, als welche das Kühlmittel im Kühlmittelkreislauf 6 fungiert, gegeben ist.

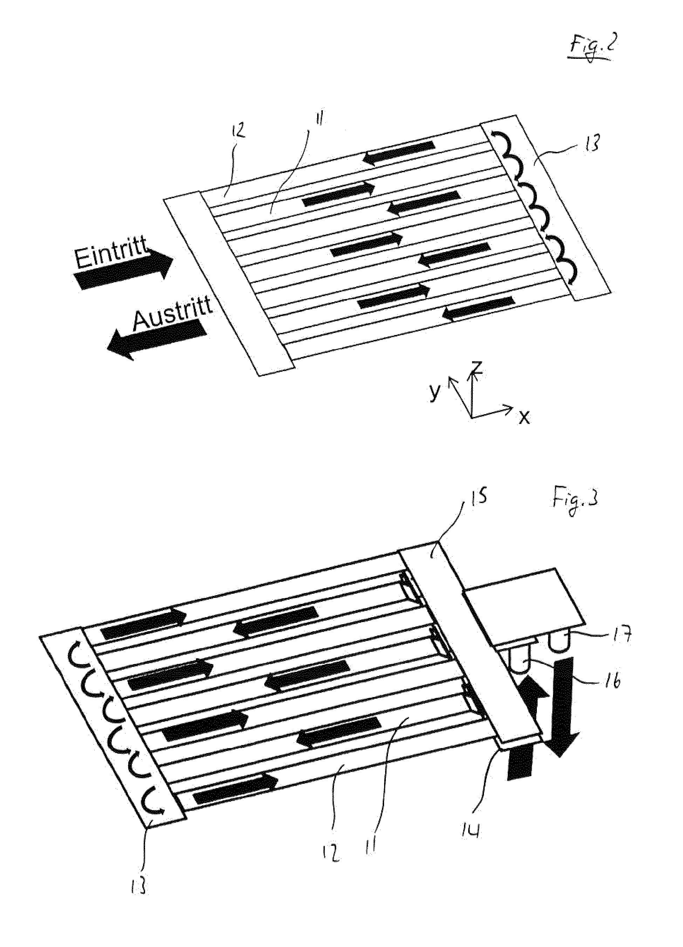

In Figur 2 ist eine schematische Ansicht des Durchströmungsprinzips der Strömungskanäle 11, 12 dargestellt. Durch die Strömungskanäle 11, 12 fließt gleichermaßen ein erstes Fluid, welches auch in dem Kühlmittelkreislauf 6 fließt. Die Strömungsrichtung innerhalb der ersten Strömungskanäle 11 ist entgegengesetzt der Strömungsrichtung der zweiten Strömungskanäle 12.

Um dies zu erreichen, wird das Fluid nach dem Durchströmen der ersten Strömungskanäle 11 in einem am Ende der ersten Strömungskanäle 11 und zweiten Strömungskanäle 12 angeordneten Umlenksammler 13 umgelenkt, so dass das Fluid anschließend durch die zweiten Strömungskanäle 12 in entgegengesetzter Strömungsrichtung zurückströmt.

Die ersten Strömungskanäle 11 werden hierfür von einem Sammelkasten gemeinsam mit dem Fluid beaufschlagt. Ebenso gibt es einen zweiten Sammelkasten welcher das Fluid nach dem Durchströmen der zweiten Strömungskanäle wieder sammelt und aus der thermoelektrischen Temperiereinheit 1 ausfeitet. Die beiden Sammelkästen sind in der Figur 2 nicht dargestellt. Weitere Angaben hierzu folgen in den weiteren Figuren.

Innerhalb des Umlenksammlers 13 können Fluidleiteinrichtungen vorgesehen sein. Dies ist jedoch nicht zwingend der Fall, da die primäre Strömungsrichtung durch das Einströmen durch die ersten Strömungskanälen 11 und das Ausströmen des Fluids durch die zweiten Strömungskanäle 12 grundsätzlich bereits zwingend vorgegeben ist.

Der Einsatz von zusätzlichen Fluidleiteinrichtungen kann dann sinnvoll sein, wenn sich eine Ungleichverteilung des Fluids über die Strömungskanäle 11, 12 einstellt.

Die Figur 3 zeigt ebenfalls eine schematische Ansicht des Durchströmungsprinzips der thermoelektrischen Temperiereinheit 1. Wie auch in Figur 2, sind lediglich die ersten und zweiten Strömungskanäle 11, 12 sowie der Umlenksammler 13 gezeigt. Auf einer Darstellung der Peltierelemente 2 sowie der Batterieelemente 5 oder zusätzlicher Plattenelemente 4, 30 wird der Übersichtlichkeit halber verzichtet. Dies ist auch in den Figuren 2, 4 und 7 der Fall.

Zusätzlich ist in Figur 3 nun ein Einlassstutzen 16, welcher mit einem Einlasssammler 14 in Fluidkommunikation steht, sowie ein Auslassstutzen 17, welcher mit einem Auslasssammler 15 in Fluidkommunikation steht, gezeigt.

Der Einlasssammler 14 ist seinerseits in einer direkten Fluidkommunikation mit den ersten Strömungskanälen 11. Der Auslasssammler 15 ebenso mit den zweiten Strömungskanälen 12.

In der in Figur 3 gezeigten Ausführung liegt der Auslasssammler 15 mit dem Umlenksammler 13 und den ersten Strömungskanälen 11 sowie den zweiten Strömungskanälen 12 in einer Ebene. Der Einlasssammler 14 ist seinerseits aus dieser Ebene nach unten heraus abgehoben und liegt somit unterhalb des Auslasssammlers 15.

Auf diese Weise kann eine thermische Isolation zwischen dem Einlasssammler 14 und dem Auslasssammler 15 erreicht werden. Dies ist insbesondere vorteilhaft, da hierdurch thermische Brücken zwischen dem Fluid vor dem Durchströmen der thermoelektrischen Temperiereinheit 1 und nach dem Durchströmen vermieden werden können.

Um eine Anbindung der ersten Strömungskanäle 11 an den Einlasssammler 14 zu gewährleisten, weisen die ersten Strömungskanäle 11 im Bereich des Einlasssammlers 14 eine geknickte Form auf, welche aus der Ebene der übrigen Bauteile hinaus zum Einlasssammler 14 leitet.

In alternativen Ausführungsformen ist es ebenso denkbar, zwischen dem Einlasssammelkasten und dem Auslasssammelkasten zusätzliche thermische Isolationsmaßnahmen zu ergreifen. Ebenso ist es denkbar, die Anordnung der Strömungskanäle und Sammelkästen in einer einzigen Ebene zu gestalten, das ist jedoch nicht zwingend.

Besonders vorteilhaft ist es, wenn die Anordnung der ersten Strömungskanäle 11 und der zweiten Strömungskanäle 12 stets in abwechselnder Reihenfolge erfolgt. Auf diese Weise lässt sich ein besonders homogenes Temperaturbild über die thermoelektrische Temperiereinheit 1 darstellen.

Dies resultiert aus der Tatsache, dass das Fluid in den ersten Strömungskanälen 11 im Falle der Kühlung der Batterieelemente 5 ein niedrigeres Temperaturniveau als das Fluid in den zweiten Strömungskanälen 12 hat.

In alternativen Ausführungsformen ist es abweichend zu den in den Figuren gezeigten Darstellung jedoch auch denkbar, jeweils eine Mehrzahl von ersten Strömungskanälen 11 als Gruppe und eine Gruppe von zweiten Strömungskanälen 12 abwechselnd zueinander anzuordnen. Die Anzahl der nebeneinander liegenden ersten Strömungskanäle 11 beziehungsweise zweiten Strömungskanäle 12 ist vom geplanten Anwendungszweck abhängig zu machen.

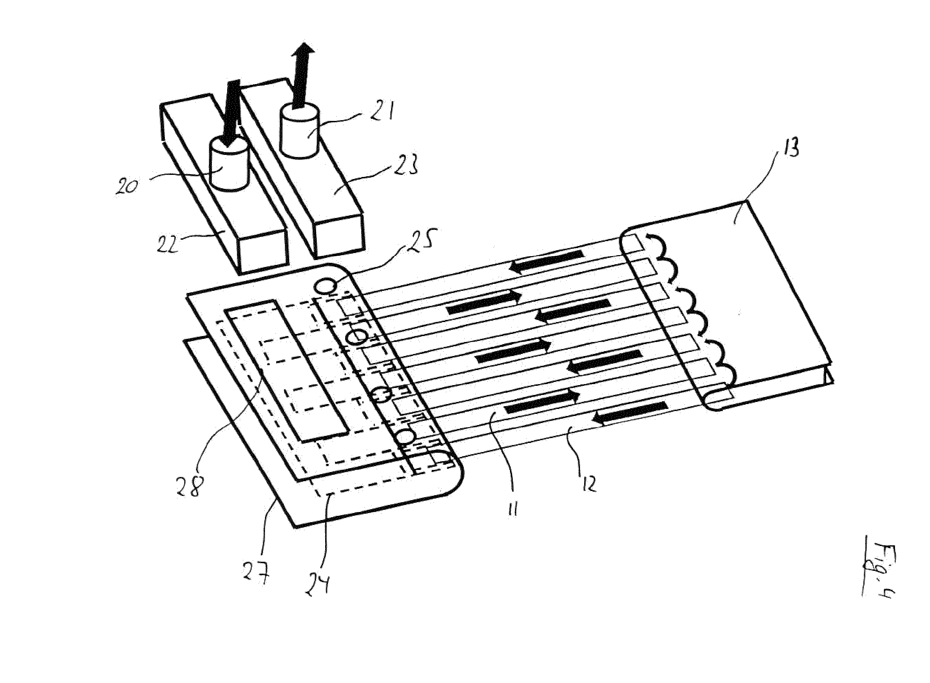

Die Figur 4 zeigt eine weitere perspektivische Ansicht einer thermoelektrischen Temperiereinheit 1. In der in Figur 4 gezeigten Version sind nun der Einlasssammler 22 sowie der Auslasssammler 23 in nur einem Bauteil ausgeführt. Hierzu weist der Einlasskasten 27, welcher aus einem U-förmig gebogenen Element besteht, in seinem Inneren ein Einlegeelement 24 auf.

Dieses Einlegeelement 24 ist so ausgeführt, dass es den an drei Seitenflächen umlaufenden offenen Bereich des Einlasskastens 27 abschließt, so dass ein geschlossenes Bauteil entsteht.

Des Weiteren ist dieses Einlegeelement 24 kammartig ausgeführt und ermöglicht eine Aufteilung in die ersten Strömungskanäle 11 sowie die zweiten Strömungskanäle 12 innerhalb des Einlasskastens 27. An der Oberseite des Einlasskastens 27 ist eine Aussparung 28 angeordnet, an welche der Einlasssammelkasten 12 direkt angebunden werden kann.

Ebenfalls auf der Oberseite des Einlasskastens 27 ist eine Mehrzahl von Auslassöffnungen 25 angeordnet. Diese werden im endmontierten Zustand vom Auslasssammelkasten 23 überdeckt und von diesem zusätzlich zur Umgebung abgedichtet.

Das Einlegeelement 24 begrenzt die Länge der zweiten Strömungskanäle 12 innerhalb des Einlasskastens 27 soweit, dass das Fluid nach dem Durchströmen der zweiten Strömungskanäle 12 nur bis zu den Auslassöffnungen 25 in dem Einlasskasten 27 strömen kann. Das Einlegeelement 24 zwingt somit das Fluid nach dem Durchströmen der zweiten Strömungskanäle 12 durch die Auslassöffnungen 25 in den Auslasssammelkasten 23 und über den Auslassstutzen 21 hinaus aus der thermoelekfrischen Temperiereinheit.

Zusätzlich bildet das Einlegeelement 24 im Inneren des Einlasskastens 27 Strömungskanäle aus, welche es ermöglichen, dass das Fluid über den Einlassstutzen 20 und den Einlasssammelkasten 22 direkt durch den Einlasskasten 27 in die ersten Strömungskanäle 11 strömt.

Der in Figur 4 dargestellte Umlenksammler 13 entspricht im Wesentlichen dem bereits in den vorherigen Figuren dargestellten Umlenksammler 13.

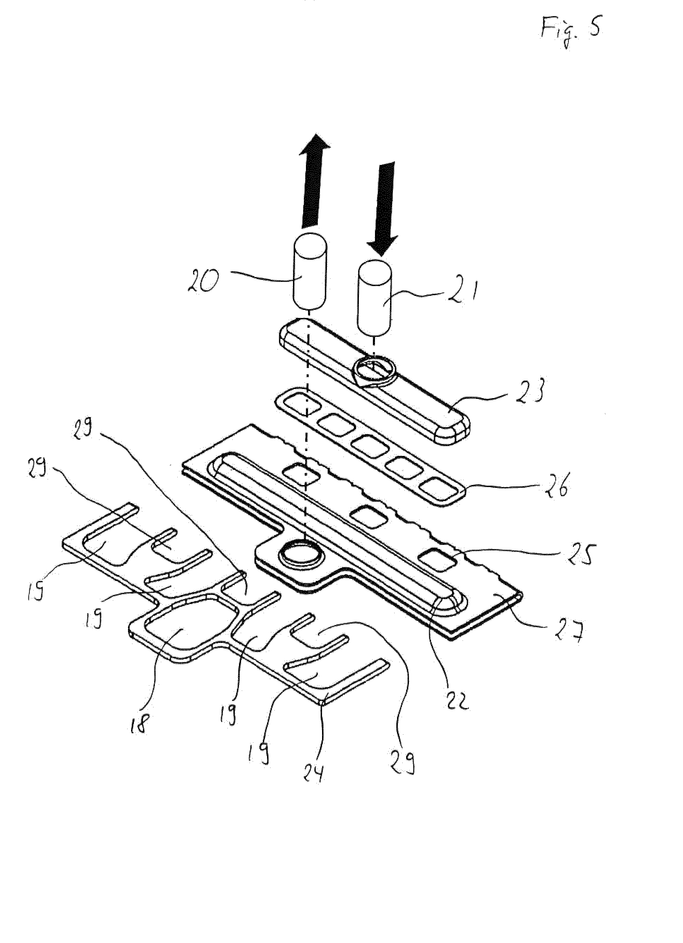

Die Figur 5 zeigt eine Explosionsdarstellung des in Figur 4 nur schematisch gezeigten Einlasskastens 27. Zu erkennen ist hier insbesondere das Einlegeelement 24, welches die Aufteilung des Fluids in die ersten Strömungskanäle 11 und die zweiten Strömungskanäle 12 steuert.

Der Einlasskasten 27 ist in der Figur 5 aus einem U-förmig gebogenen Bauteil dargestellt. Das Fluid strömt durch den Einlassstutzen 20 und durch das Einlegeelement 24, welches den Einlasskasten 27 nach außen hin abdichtet. Über den Einlasssammler 22, welcher hier als Ausprägung im Einlasskasten 27 vorgesehen ist, kann das Fluid in die Aussparung 18 des Einlegeelements 24 einströmen, von da kann es in die vier längeren Aussparungen 19 über das Einlegeelement 24 einströmen. Dies wird durch den Einlasssammler 22 ermöglicht, der so im Einlasskasten 27 angeordnet ist, dass das Fluid das Einlegeelement 24 im Bereich der längeren Aussparungen 19, welche mit den ersten Strömungskanälen 11 in Fluidkommunikation stehen, überströmen kann.

Ein Einströmen des Fluids in die drei kürzeren Aussparungen 29, welche in direkter Fluidkommunikation mit den zweiten Strömungskanälen 12 stehen, ist nicht möglich, da durch die Anordnung des Einlasssammlers 22 der Weg zu diesen drei Aussparungen für das Fluid begrenzt oder versperrt ist.

Nach dem Durchströmen der ersten Strömungskanäle 11, dem Umlenken im Umlenksammler 13 und dem Rückströmen durch die zweiten Strömungskanäle 12, die alle in der Figur 5 nicht dargestellt sind, erreicht das Fluid die drei kürzeren Aussparungen 29 des Einlegeelementes 24. Von dort strömt das Fluid über die Aussparungen 25 und das aufgelegte Lochblech 26 in den von außen auf den Einlasskasten 27 aufgesetzten Sammelkasten 23 und von dort über den Auslassstutzen 21 aus der thermoelektrischen Temperiereinheit 1 hinaus.

Die hier in Figur 5 gezeigte Ausführungsform für einen solchen Einlasskasten 27 ist lediglich ein Ausführungsbeispiel und kann in der Praxis durch viele andere Anordnungen der Einlass- und Auslasssammelkästen zueinander erreicht werden. Neben der Ausführung der Einlass- und Auslasssammelkästen in einem Bauteil ist natürlich weiterhin auch die Anordnung einzelner Einlasskästen und Auslasskästen an der thermoelektrischen Temperiereinheit denkbar.

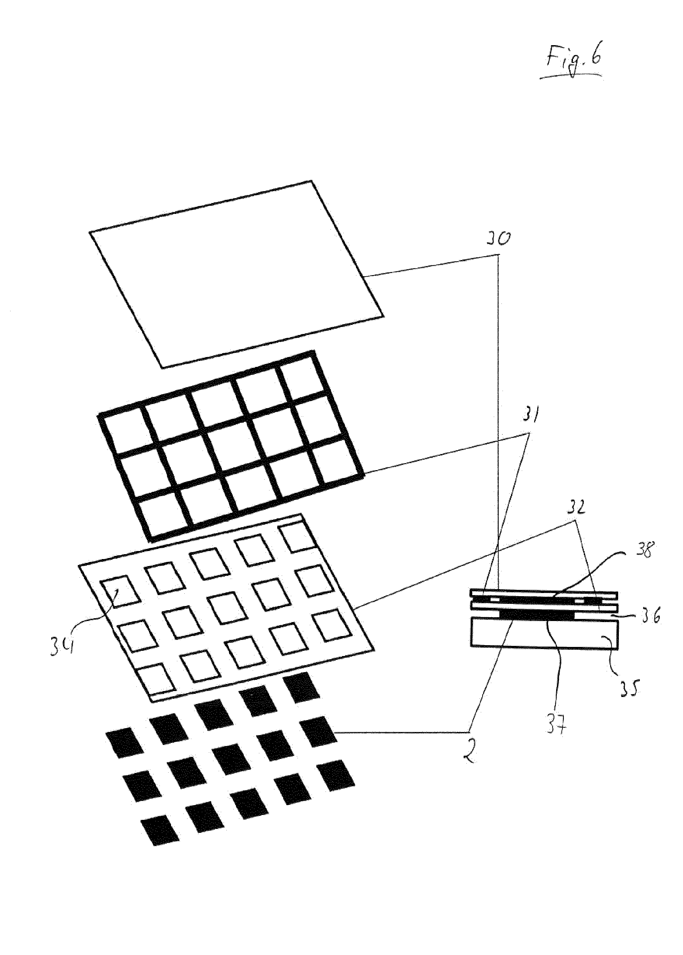

Die Figur 6 zeigt eine mögliche Ausgestaltung der Anbindung der Peltierelemente 2 in Richtung der Batterieelemente 5. Neben dem bereits in den vorangegangen Figuren angedeuteten Verbindung mit einer Platte 30, welche dann wiederum an die Batterieelemente 5 angebunden ist, kann es auch notwendig sein, zusätzliche versteifende Maßnahmen einzuführen, um beispielsweise ein Verformen der thermoelektrischen Temperiereinheit 1 in Folge von thermischen Spannungen zu verhindern. Hierzu bietet sich der Aufbau, der in Figur 6 dargestellt ist, an. In einem Schichtaufbau liegt zuoberst eine Platte 30, welche auf ihrer Oberseite im Späteren direkt an die Batterieelemente 5 angebunden wird. Darunter folgend ist ein Rahmen 31 angeordnet, welcher Aussparungen entsprechend der Größe und Anordnung der Peltierelemente 2 aufweist. Unter diesem Rahmen 31 wird eine untere Platte 32 angeordnet, welche ebenfalls Aussparungen 34 aufweist, durch welche die Peltierelemente 2 gesteckt werden können. Dieser schichthafte Aufbau ist im linken Teil der Figur 6 dargestellt. Im rechten Teil der Figur 6 ist ein zusammengebautes Modul aus den links stehenden Bauteilen gezeigt.

Hier sind die Peltierelemente 2 durch die untere Platte 32 gesteckt und auf die untere Platte 32 ist der Rahmen 31 aufgelegt. Den oberen Abschluss bildet die Platte 30.

Besonders hervorzuheben ist, dass die zweite Oberfläche 38 der Peltierelemente 2 in direktem, thermisch leitenden Kontakt mit der oberen Platte 30 steht. An die Platte 30 können dann eine oder mehrere wärmeerzeugende Elemente angebunden werden. Des Weiteren ist zu erwähnen, dass zwischen der unteren Platte 32 und der Anbindung der Peltierelemente 2 an die Strömungskanäle 11, 12, welche durch den Block 35 dargestellt sind, auf jeden Fall ein Luftspalt 36 bestehen bleiben muss. Dieser Luftspalt 36 dient der thermischen Isolation der warmen Seite der Peltierelemente 2 zu deren kalter Seite. Die thermische Anbindung der Peltierelemente 2 an den Kühlkreislauf geschieht über deren erste Oberfläche 37.

Auch dieser Aufbau zur Erhöhung der Steifigkeit der thermoelektrischen Temperiereinheit ist beispielhaft zu sehen und kann ebenfalls durch andere Mittel, wie etwa einem aus einem Stück gegossenen Bauteil, das die obere Platte 30, einen Rahmen 31 und/oder die untere Platte 32 umfassen könnte, gebildet werden.

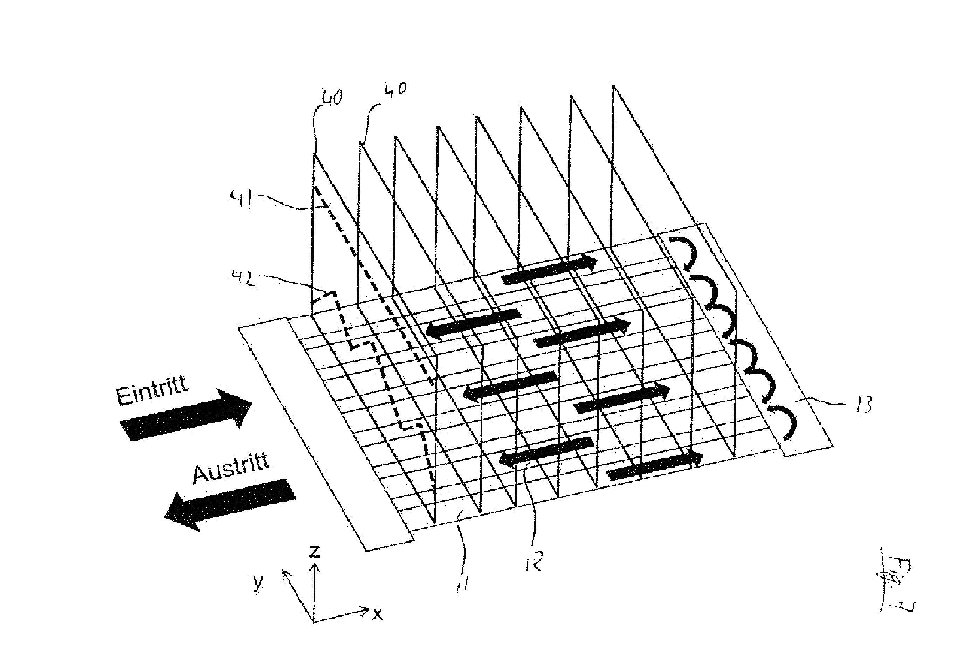

Die Figur 7 zeigt ebenfalls wieder eine schematische Darstellung der Durchströmung der thermoelektrischen Temperiereinheit 1. Zusätzlich zu dem bereits in den Figuren 2 und 3 gezeigten Aufbau sind nun hier die Batterieelemente 40 angedeutet. Diese werden quer über die ersten Strömungskanäle 11 und zweiten Strömungskanäle 12 hinweg angeordnet.

Im ersten der Batterieelemente 40 ist über die Kurve 42 ein erster qualitativer Temperaturverlauf angedeutet, welcher sich aufgrund der unterschiedlichen Temperaturen der ersten Strömungskanäle 11 und der zweiten Strömungskanäle 12 im unteren, den Strömungskanälen 11, 12 zugewandten Bereich der Batterieelemente 40, ergibt.

Es ist zu erkennen, dass der qualitative Temperaturverlauf 42 stark davon abhängig ist, ob ein erster Strömungskanal 11 oder ein zweiter Strömungskanal 12 unter dem Batterieelement 40 verläuft. Dies ist auf die unterschiedlichen Temperaturen des Fluids in den Strömungskanälen 11, 12 zurückzuführen.

Mit steigender Distanz innerhalb des Batterieelements 40 zu den Strömungskanälen 11, 12 flacht dieser qualitative Temperaturverlauf jedoch immer stärker ab, so dass sich im oberen Bereich des Batterieelements 40 der gezeigte, qualitative Temperaturverlauf 41 einstellt, welcher eine weitgehend homogene Temperaturverteilung über die Breite der Batterieelemente 40 zeigt.

Dies ist insbesondere vorteilhaft, da sich im Falle der Batteriekühlung die kritischsten, sprich höchsten Temperaturen im oberen, also von den Strömungskanälen 11, 12 entfernten Bereichen der Batterieelemente 5 einstellen.

## Patentansprüche

1. Thermoelektrische Temperiereinheit (1), insbesondere zur Temperierung eines Energiespeichers in einem Kraftfahrzeug, mit zumindest einem ersten Peltierelement (2), welches eine erste Oberfläche (37) und eine zweite, der ersten Oberfläche (37) im Wesentlichen benachbart oder gegenüberliegende Oberfläche (38) aufweist, **dadurch gekennzeichnet, dass** die erste Oberfläche (37) thermisch leitend mit zumindest einem ersten Strömungskanal (11) und/oder einem zweiten Strömungskanal (12) verbunden ist, welche von einem ersten Fluid durchströmbar sind, und die zweite Oberfläche thermisch leitend mit zumindest einem ersten wärmeerzeugenden Element verbunden ist, wobei der erste Strömungskanal (11) an einem seiner Enden mit einem ersten Sammler (14, 22) in Fluidkommunikation steht und der zweite Strömungskanal (12) an einem seiner Enden mit einem zweiten Sammler (15, 23) in Fluidkommunikation steht und der erste Strömungskanal (11) und der zweite Strömungskanal (12) an ihrem jeweils zweiten Ende mit einem gemeinsamen Umlenksammler (13) in Fluidkommunikation stehen.

2. Thermoelektrische Temperiereinheit (1) nach einem der vorhergehenden Ansprüche, **dadurch gekennzeichnet, dass** der erste Strömungskanal (11) und der zweite Strömungskanal (12) im Wesentlichen parallel zueinander verlaufen.

3. Thermoelektrische Temperiereinheit (1) nach einem der vorhergehenden Ansprüche, **dadurch gekennzeichnet, dass** das erste Fluid im ersten Strömungskanal (11) im Gegenstrom zu dem ersten Fluid im zweiten Strömungskanal (12) strömbar ist.

4. Thermoelektrische Temperiereinheit (1) nach einem der vorhergehenden Ansprüche, **dadurch gekennzeichnet, dass** die erste Oberfläche (37) der Peltierelemente (2) über eine erste Platte (4) mit dem ersten Strömungskanal (11) und/oder dem zweiten Strömungskanal (12) in thermischen Kontakt steht.

5. Thermoelektrische Temperiereinheit nach Anspruch 4, **dadurch gekennzeichnet, dass** die erste Platte (4) Schlitze aufweist, die zwischen dem ersten Strömungskanal (11) und dem zweiten Strömungskanal (12) angeordnet sind.

6. Thermoelektrische Temperiereinheit (1) nach einem der vorhergehenden Ansprüche, **dadurch gekennzeichnet, dass** der gemeinsame Umkehrsammler (13) fluidleitende Strukturen aufweist, welche das erste Fluid von dem ersten Strömungskanal (11) in den zweiten Strömungskanal (12) leitet,

7. Thermoelektrische Temperiereinheit (1) nach einem der vorhergehenden Ansprüche, **dadurch gekennzeichnet, dass** die die zweite Oberfläche (38) des Peltierelementes (2) mit einer dritten Fläche einer zweiten Platte (30) verbunden ist und die vierte Fläche der zweiten Platte (30) mit dem zumindest ersten wärmeerzeugenden Element verbunden ist.

8. Thermoelektrische Temperiereinheit (1) nach einem der vorhergehenden Ansprüche, **dadurch gekennzeichnet, dass** der erste Sammler (14, 22) von dem zweiten Sammler (15, 23) thermisch isoliert ist.

9. Thermoelektrische Temperiereinheit (1) nach einem der vorhergehenden Ansprüche, **dadurch gekennzeichnet, dass** der erste Sammler (22) und der zweite Sammler (23) in einem Bauteil realisiert ist.

10. Thermoelektrische Temperiereinheit (1) nach einem der vorhergehenden Ansprüche, **dadurch gekennzeichnet, dass** sie eine Mehrzahl von ersten Strömungskanälen (11) aufweist und eine Mehrzahl von zweiten Strömungskanälen (12) aufweist, wobei bevorzugt die Anzahl der zweiten Strömungskanäle (12) gleich groß oder größer der Anzahl der ersten Strömungskanäle (11) ist.

11. Thermoelektrische Temperiereinheit (1) nach einem der vorhergehenden Ansprüche, **dadurch gekennzeichnet, dass** einzelne Strömungskanäle (11, 12) oder Gruppen von Strömungskanälen (11, 12) der ersten Strömungskanäle (11) und der zweiten Strömungskanäle (12) abwechselnd zueinander angeordnet sind.

12. Thermoelektrische Temperiereinheit (1) nach einem der vorhergehenden Ansprüche, **dadurch gekennzeichnet, dass** sie eine Mehrzahl von Peltierelementen (2) aufweist, und eine Mehrzahl von wärmeerzeugenden Elementen aufweist.
